# EUROPEAN PATENT SPECIFICATION

(11) **EP 2 929 974 B1**
(45) Date of publication and mention of the grant of the patent: **11.07.2018**
(21) Application number: 13860637.1
(22) Date of filing: 03.12.2013
(51) Int. Cl.: B23K 9/173, B23K 9/16, B23K 35/30, B23K 9/02, B23K 35/38, B23K 101/00

(54) **NARROW-GROOVE GAS-SHIELDED ARC WELDED JOINT**
VERBINDUNG ZUM LICHTBOGENSCHWEISSEN IN SCHUTZGAS MIT GERINGEM BANDABSTAND
MOYEN DE SOUDAGE À L'ARC SOUS PROTECTION GAZEUSE SUR CHANFREIN ÉTROIT

(30) Priority: 04.12.2012 JP 2012265518
(43) Date of publication of application: 14.10.2015
(73) Proprietor: JFE Steel Corporation, Tokyo 100-0011 (JP)
(72) Inventor: KATAOKA, Tokihiko, Tokyo 100-0011 (JP); SUMI, Hiroyuki, Tokyo 100-0011 (JP); KITANI, Yasushi, Tokyo 100-0011 (JP); OI, Kenji, Tokyo 100-0011 (JP); YASUDA, Koichi, Tokyo 100-0011 (JP)
(74) Representative: Stebbing, Timothy Charles
(86) International application number: PCT/JP2013/082899
(87) International publication number: WO 2014/088111

(56) References cited:
- JP-A- S5 111 033
- JP-A- S6 149 779
- JP-A- H01 148 469
- JP-A- H10 211 597
- JP-A- S59 212 176
- JP-A- S60 210 368
- JP-A- S63 207 475
- JP-A- 2000 218 391
- JP-A- 2001 001 148
- JP-A- 2002 539 950
- JP-A- 2007 118 068
- JP-A- 2012 051 030
- YUZHEN ZHAO ET AL: "The study of surface active element on weld pool development in A-TIG welding; Study of surface active element on weld pool development", MODELLING AND SIMULATION IN MATERIALS SCIENCE AND ENGINEERING, IOP PUBLISHING, BRISTOL, GB, vol. 14, no. 3, 1 April 2006 (2006-04-01), pages 331-349, XP020105585, ISSN: 0965-0393, DOI: 10.1088/0965-0393/14/3/001
- DONGJIE LI ET AL: "Study of the law between the weld pool shape variations with the welding parameters under two TIG processes", JOURNAL OF MATERIALS PROCESSING TECHNOLOGY, ELSEVIER, NL, vol. 212, no. 1, 25 August 2011 (2011-08-25), pages 128-136, XP028103142, ISSN: 0924-0136, DOI: 10.1016/J.JMATPROTEC.2011.08.015 [retrieved on 2011-09-01]
- D. K. AIDUN ET AL: "Effect of sulfur and oxygen on weld penetration of high-purity austenitic stainless steels", JOURNAL OF MATERIALS ENGINEERING AND PERFORMANCE., vol. 6, no. 4, 1 August 1997 (1997-08-01), pages 496-502, XP055252665, US ISSN: 1059-9495, DOI: 10.1007/s11665-997-0121-1
- LU S ET AL: "Sensitivity of Marangoni convection and weld shape variations to welding parameters in O2-Ar shielded GTA welding", SCRIPTA MATERIALIA, ELSEVIER, AMSTERDAM, NL, vol. 51, no. 3, 1 August 2004 (2004-08-01) , pages 271-277, XP004509538, ISSN: 1359-6462, DOI: 10.1016/J.SCRIPTAMAT.2004.03.004

## Description

### TECHNICAL FIELD

The present invention relates to a gas-shielded arc welded joint and particularly to a narrow-groove gas-shielded arc welded joint of thick steel materials.

In the context of the present invention, "narrow-groove" refers to a groove angle of 20° or less and to the narrowest groove width between steel materials to be welded being 50 % or less of the sheet thickness of the steel materials.

### BACKGROUND

For gas-shielded arc welding used in welding work on steel, a consumable electrode that uses CO₂ gas alone, or a mixed gas of Ar and CO₂, to shield the fusion zone is typical. This type of welding is widely used in the fields of manufacturing automobiles, buildings, bridges, electrical equipment, and the like.

In recent years, however, along with an increase in size and thickness of steel structures, the amount of deposition has increased for welding during the manufacturing process, particularly for butt welding of steel materials, and furthermore a long time is necessary for weld working, leading to an increase in weld working costs.

One method for improving this situation is to adopt narrow-groove gas-shielded arc welding for multilayer welding by arc welding the groove in a space that is small with respect to the sheet thickness. The amount of deposition is less for narrow-groove gas-shielded arc welding than for regular gas-shielded arc welding, allowing for an increase in welding efficiency and a reduction in energy. A reduction in weld working costs is therefore also expected.

As a technique related to such narrow-groove gas-shielded arc welding, JP H07-116852 A (PTL 1) discloses a narrow-groove MIG welding torch, and a welding method using the welding torch, whereby the opening in the nozzle for the welding shielding gas is formed as a slanted oval (ellipse) for good diffusion of the shielding gas, the opening in the contact tip of the torch is formed as an oval, and the weaving direction of the weld wire is always set to be a certain direction.

In this welding method, stacked welding using an inert gas is performed with one pass per layer. In such welding with one pass per layer, however, heat concentrates in the central portion of the groove, so that fusion becomes insufficient at the groove face of the steel materials and the depth of fusion decreases. To compensate, the weaving direction of the weld wire is always set to be a certain direction, thus ensuring the depth of fusion at the groove face and reducing the number of welding defects due to lack of penetration or the like.

Furthermore, JP S50-67758 A (PTL 2) discloses a tip for submerged welding in which one surface of a tip portion of a welding torch end is projected, and the projecting portion is curved to be concave along a through-hole.

This tip for submerged welding uses the curl of the weld wire to feed the weld wire from the tip in a curved state, thereby generating an arc at a position near the groove face to ensure the depth of fusion at the groove face and reduce the number of welding defects due to lack of penetration or the like.

JP 2012 051030 (PTL 3) discloses a welding method for performing a narrow groove butt welding of thick steel plate with a gas-shielded arc welding method. A study by Yuzhen Zhao et al published in Modelling and Simulation in Materials Science and Engineering, vol.14, no.3, pages 331-349 concerns surface active element on weld pool development in A-TIG welding. In a further study by Dongjie Li et al, Journal of Materials Processing Technology, vol.212, no.1, pages 128-136 the law between the weld pool shape variations with the welding parameters under two TIG (tungsten inert gas) processes is investigated.

### CITATION LIST

### Patent Literature

PTL 1: JP H07-116852 A
PTL 2: JP S50-67758 A
PTL 3: JP 2012 051030 A

With the techniques disclosed in PTL 1 and PTL 2, however, the fusion at the groove face of the steel materials cannot always be deemed to be sufficient. Therefore, in the techniques disclosed in PTL 1 and PTL 2, for effective suppression of welding defects due to lack of penetration or the like, it is considered necessary to form a groove in the steel materials by applying an extremely precise and clean machining process.

On the other hand, apart from high value-added steel structures, in general structures such as buildings, bridges, and ships, factors such as cost have made it standard to form a groove by gas cutting, plasma cutting, or the like and to weld the resulting steel material as is. Groove formation by gas cutting, plasma cutting, or the like is low cost and has high workability. Groove formation by gas cutting, plasma cutting, or the like, however, roughens the surface of the groove face, i.e. the surface roughness tends to increase, making it difficult to perform highly accurate processing such as a machining process.

Therefore, it is difficult to apply the techniques disclosed in PTL 1 and PTL 2 to general structures such as buildings, bridges, ships, and the like.

The present invention has been developed to resolve the above problems and provides a narrow-groove gas-shielded arc welded joint of thick steel materials that, even when using low-cost groove formation by gas cutting, plasma cutting, or the like, can effectively prevent defects due to high-temperature cracks, lack of fusion, or the like when performing highly efficient narrow-groove gas-shielded arc welding without treatment or the like of the groove face, and that also has a small amount of deposition.

### SUMMARY

In order to solve the above problems, the inventors of the present invention repeatedly investigated the connection between the bead shape, including the penetration shape, and welding defect prevention in a narrow-groove gas-shielded arc welded joint of thick steel materials, in particular a welded joint obtained when using a method for narrow-groove gas-shielded arc welding of thick steel materials having a sheet thickness of 22 mm or more.

As a result, the inventors discovered that in the aforementioned narrow-groove gas-shielded arc welded joint of thick steel materials, under the following conditions, defects due to high-temperature cracks, lack of fusion, or the like can effectively be prevented even when performing highly efficient narrow-groove gas-shielded arc welding using thick steel materials subjected to groove formation by gas cutting, plasma cutting, or the like:
(a) setting the depth of fusion from the groove face at the bottom portion of the thick steel materials to be 1.5 mm or more, and
(b) controlling the total amount of oxygen (O) and sulfur (S) contained in the weld metal to be in a range of 400 mass ppm or more to 1000 mass ppm or less.

The present invention is based on these findings.

The primary features of the present invention are as follows.
1. A narrow-groove gas-shielded arc welded joint with a groove angle of 20° or less and the narrowest groove width between steel materials to be welded being 50% or less of the sheet thickness of the steel materials obtained by multilayer, narrow-groove gas-shielded arc welding of thick steel materials having a sheet thickness of 22 mm or more, a depth of fusion at a bottom portion of the thick steel materials being 1.5 mm or more, and a total amount of oxygen (O) and sulfur (S) contained in a weld metal being in a range of 400 mass ppm or more to 1000 mass ppm or less, wherein in initial layer welding during the narrow-groove gas-shielded arc welding, a weld deposit height is 0.4 times or more to 1.0 times or less a bottom portion groove gap.

According to the present invention, it is possible to obtain a welded joint, via highly efficient narrow-groove gas-shielded arc welding, in which defects due to high-temperature cracks, lack of fusion, or the like do not occur even when applying low-cost groove formation by gas cutting, plasma cutting, or the like, and that also has a small amount of deposition.

Furthermore, the welded joint resulting from narrow-groove gas-shielded arc welding has a greatly reduced manufacturing cost as compared to a conventional welded joint and is therefore extremely useful, particularly in general structures such as buildings, bridges, ships, and the like.

### BRIEF DESCRIPTION OF THE DRAWINGS

The present invention will be further described below with reference to the accompanying drawings, wherein:
FIG. 1 illustrates a variety of preferred groove shapes for obtaining the welded joint according to the present invention;
FIG. 2 illustrates a preferred way of performing welding by using a V-shaped groove;
FIG. 3 illustrates the groove after initial layer welding when performing welding by using a V-shaped groove;
FIG. 4 illustrates the maximum depth of the concave portion on the groove face; and
FIG. 5 is a photograph of a groove cross-section after the initial layer welding in an Inventive Example (Sample No. 7) of the present invention.

### DETAILED DESCRIPTION

The present invention will be described in detail below.

First, the reasons for limiting the sheet thickness of the steel materials, the depth of fusion at the bottom portion of the thick steel materials, and the total amount of oxygen (O) and sulfur (S) contained in the weld metal to the aforementioned ranges in the welded joint according to the present invention are explained.

### Sheet thickness t: 22 mm or more

The sheet thickness of the steel material is set to 22 mm or more. The reason is that if the sheet thickness of the steel material is less than 22 mm, upon increasing the groove angle in a conventional single bevel groove and reducing the groove gap, the groove cross-sectional area in some cases becomes smaller than that of the narrow-groove gas-shielded welded joint according to the present invention.

For example, when the sheet thickness t is 20 mm, then in a narrow-groove gas-shielded welded joint obtained from an I-shaped groove with a groove angle of 0° and a groove gap of 7 mm, the groove cross-sectional area is 140 mm², yet in a welded joint obtained from a single bevel groove with a groove angle of 25° and a groove gap of 2 mm, the groove cross-sectional area is 133 mm². Welding for the welded joint obtained from a single bevel groove thus has a smaller amount of deposition and is highly efficient.

When targeting general rolled steel material, the upper limit of the sheet thickness is typically 100 mm. Accordingly, the upper limit on the sheet thickness of the steel material targeted by the present invention is preferably 100 mm or less.

As the type of steel targeted for the welded joint according to the present invention, high-strength steel is particularly preferable. The reason is that high-strength steel has a strictly limited welding heat input, and cracks easily occur in the weld metal. By contrast, in the present invention, welding can be performed efficiently from the initial layer to the final layer at a heat input of 20 kJ/cm or less, and the weld shape of each pass is nearly that of fillet welding at 90°, yielding a shape that does not crack easily. Furthermore, welding of 780 MPa grade steel is possible without preheating, and welding of high-alloy 590 MPa grade corrosion-resistant steel is also possible. Of course, the present invention may also be applied to soft steel without any problem.

### Depth of fusion P at bottom portion of thick steel materials: 1.5 mm or more

During groove formation of the steel materials in the welded joint according to the present invention, gas cutting, plasma cutting, laser cutting, or the like is used. The use of a machining process, however, is not negated. On the other hand, the depth of fusion necessary for the groove face in narrow-groove gas-shielded arc welding is mainly determined by the surface characteristics of the groove face (in particular, the depth of the concave portion and the degree of cleanliness).

With groove formation by gas cutting, which is most typical, a large difference occurs in the finishing of the cut surface depending on the selection of the gas flow rate and the burner during gas cutting, except in the cases of special steel, stainless steel, or the like. For example, the depth of the concave portion on the surface of the groove face when the gas flow rate and burner are adjusted well is approximately 0.2 mm or less, yet in a special case, such as when the flame flow rate is below normal due to wear of the burner or other such reason, the depth of the concave portion may exceed 1 mm. Even if such a concave portion occurs, however, the steel material is welded as is for general structures or the like, without any further treatment. Accordingly, for effective prevention of defects due to high-temperature cracks, lack of fusion, or the like, the groove face needs to be fused deeper at the time of welding, in particular the bottom portion of the thick steel materials which tends to be at a low temperature during welding and to have a small depth of fusion. Furthermore, the groove face also needs to be fused deeper at the time of welding because the cut surface is covered by a thick oxidized film generated during heating.

For these reasons, in the present invention, the depth of fusion P at the bottom portion of the thick steel materials is set to 1.5 mm or more. The depth of fusion is preferably 2.0 mm or more. If the depth of fusion exceeds 4 mm, however, undercut occurs in the upper portion of the weld bead on the groove face, leading to a welding defect. Hence, the depth of fusion is preferably 4 mm or less.

### Total amount of oxygen (O) and sulfur (S) contained in the weld metal: 400 mass ppm or more to 1000 mass ppm or less

The penetration of the weld zone is controlled by the gouging effect due to the arc itself and the convection of the weld metal in a high-temperature state. When the convection of the weld metal is inward, the weld metal at a high temperature flows downwards from above, thereby increasing the penetration directly below the arc. On the other hand, when the convection of the weld metal is outward, the weld metal at a high temperature flows to the left and right from the center, the weld bead expands, and penetration into the groove face increases. Accordingly, in order to achieve a depth of fusion at the bottom portion of the thick steel material of 1.5 mm or more, convection of the weld metal is preferably outward. From this perspective, the total amount of oxygen (O) and sulfur (S), which control the fluidity of the weld metal, needs to be set to 400 mass ppm (hereinafter simply "ppm") or more. If the total amount of oxygen (O) and sulfur (S) exceeds 1000 ppm, however, guaranteeing toughness of the weld metal becomes difficult.

For these reasons, the total amount of oxygen (O) and sulfur (S) contained in the weld metal needs to be set in a range of 400 ppm or more to 1000 ppm or less. The total amount is preferably in a range of 500 ppm or more to 1000 ppm or less.

The S content in the weld metal can be controlled by the S content in the weld wire and the S content in the steel materials. The O content in the weld metal can be controlled by the O content in the weld wire and the O content in the steel materials, and also by the ratio of active gasses such as CO₂, O₂, and the like contained in the shielding gas.

The reasons for limiting the sheet thickness of the steel materials, the depth of fusion at the bottom portion of the thick steel materials, and the total amount of oxygen (O) and sulfur (S) contained in the weld metal in the welded joint according to the present invention have been described. In order to obtain the above-described welded joint, however, it is essential to perform narrow-groove gas-shielded arc welding that satisfies the following groove conditions and welding conditions.

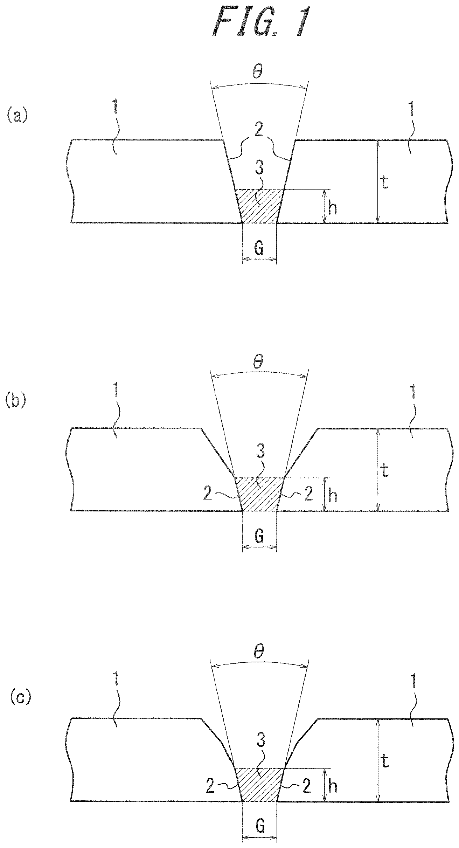

FIGS. 1(a) to 1(c) illustrate a variety of preferred groove shapes for obtaining the welded joint according to the present invention. In these drawings, reference number 1 indicates thick steel material, 2 indicates the groove face of thick steel material, 3 indicates the bottom portion groove, reference sign θ indicates the bottom portion groove angle, G indicates the bottom portion groove gap, h indicates the bottom portion groove height, and t indicates the sheet thickness.

As illustrated in these drawings, either a V-shaped groove (including an I-shaped groove) or a Y-shaped groove is a preferable groove shape for obtaining the welded joint according to the present invention, and as illustrated in FIG. 1(c), a Y-shaped groove with multiple steps may also be adopted.

Here, the bottom portion groove is defined as the groove at the lower portion of the steel materials. The groove at the lower portion of the steel materials refers to a region extending from the bottom surface of the steel materials up to approximately 20 % to 40 % of the sheet thickness.

The bottom portion groove angle is indicated by θ, the bottom portion groove gap by G, and the bottom portion groove height by h in relation to the above definition for the bottom portion groove. In the case of a V-shaped groove, the bottom portion groove height h is defined as 20 % of the sheet thickness t.

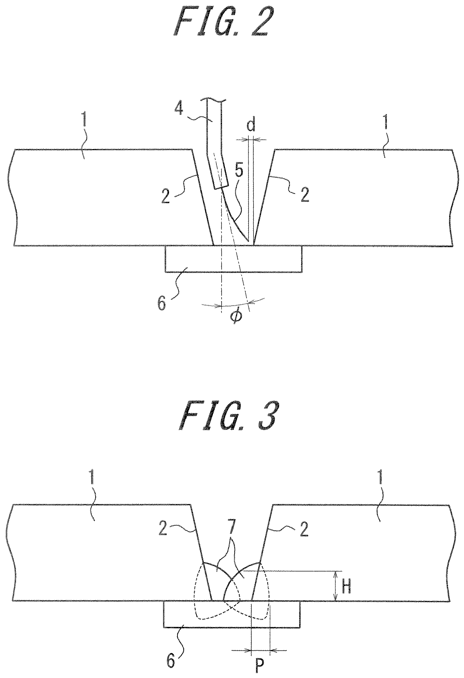

FIG. 2 illustrates a preferred way of performing welding by using a V-shaped groove. In FIG. 2, reference numbers 4 and 5 respectively indicate the power supply tip of the welding torch and the weld wire, 6 indicates backing material, reference sign *φ* indicates the feed angle of the weld wire fed from the power supply tip of the welding torch end, and d indicates the distance at the bottom portion groove between the lateral end of the tip of the weld wire and the groove face of the thick steel material.

Here, an example of a V-shaped groove is used, yet *φ* and d are similar for other groove shapes as well.

Furthermore, FIG. 3 illustrates the groove after initial layer welding when performing welding by using a V-shaped groove. In FIG. 3, reference number 7 indicates weld beads, reference sign P indicates the depth of fusion at the bottom portion of the thick steel material, and H indicates the weld deposit height (average height of the weld beads).

Here, an example of a V-shaped groove is used, yet P and H are similar for other groove shapes as well.

### Bottom portion groove angle θ: 10° or less

As the groove portion of the steel material is smaller, it becomes possible to perform highly efficient welding faster, yet defects such as a lack of fusion occur more easily. Furthermore, welding when the bottom portion groove angle exceeds 10° can be performed with a conventional method. Therefore, the bottom portion groove angle is preferably 10° or less, an angle for which welding with a conventional method is difficult and for which a further increase in efficiency can be expected.

In a V-shaped groove, the case of the bottom portion groove angle being 0° is referred to as an I-shaped groove, and from the perspective of the amount of deposition, 0° is the most efficient angle, yet the groove closes during welding due to welding heat strain. In light of this, the bottom portion groove angle is more preferably set in accordance with the sheet thickness t (or the bottom portion groove height h in the case of a Y-shaped groove).

Specifically, the bottom portion groove angle is more preferably set in a range of (0.5 × t/20)° to (2.0 × t/20)°, and even more preferably in a range of (0.8 × t/20)° to (1.2 × t/20)°. For example, in the case of a sheet thickness t of 100 m, the bottom portion groove angle is more preferably in a range of 2.5° to 10°, and even more preferably in a range of 4° to 6°.

Upon the sheet thickness t exceeding 100 mm, however, the upper limit exceeds 10°. In this case, the upper limit is set to 10°.

### Bottom portion groove gap G: 7 mm or more to 15 mm or less

As the groove portion of the steel material is smaller, it becomes possible to perform highly efficient welding faster, yet defects such as a lack of fusion occur more easily. Furthermore, welding when the bottom portion groove gap exceeds 15 mm can be performed with a conventional method. Therefore, the bottom portion groove gap is preferably 15 mm or less, a length for which welding with a conventional method is difficult and for which a further increase in efficiency can be expected. On the other hand, when the bottom portion groove gap is less than 7 mm, welding with two or more passes per layer as described below becomes difficult. Therefore, the bottom portion groove gap is preferably set to be in a range of 7 mm or more to 15 mm or less, and more preferably in a range of 8 mm or more to 12 mm or less.

### Initial layer welding: Two passes or more, distributed over both sides of the bottom portion groove gap

In narrow-groove multilayer welding, one pass per layer is typical. With one pass per layer, however, heat concentrates in the center of the groove. Fusion at the groove face of the steel materials is therefore insufficient, easily leading to defects such as a lack of fusion (cold wrap) and inclusion of spatter and slag deposited on the groove face. In particular, since the temperature of the steel materials is low and the depth of fusion is small for the initial layer welding, defects due to a lack of fusion occur easily.

Accordingly, in order to ensure the necessary depth of fusion and amount of deposition and to suppress defects such as a lack of fusion in the initial layer welding, two passes or more are preferably used for the initial layer welding, and in order to make it easier to fuse both sides of the groove face, the passes are preferably distributed over both sides of the bottom portion groove gap.

On the other hand, when four passes or more are used for the initial layer welding, the heat input per pass reduces, and the amount of fusion decreases. Hence, two or three passes are more preferably used for the initial layer welding. To ensure the amount of fusion by increased heat input and to increase efficiency, the initial layer welding is optimally performed with two passes.

To stabilize the arc and the penetration shape, movement of the welding torch and the electrode (weld wire), such as weaving or rotation, is preferably suppressed.

### Feed angle of the weld wire fed from the power supply tip of the welding torch end: 5° or more to 15° or less with respect to a perpendicular line

The arc has the property of being directional and of tending to face the direction in which the tip of the electrode (weld wire) points. To use this directionality of the arc effectively during welding of the groove face, it is necessary for the direction in which the electrode tip points to be directed to the groove face. The direction in which the electrode tip points varies greatly depending on the feed angle of the weld wire fed from the power supply tip of the welding torch end.

If the feed angle of the weld wire fed from the power supply tip of the welding torch end is less than 5° with respect to a perpendicular line, the current ends up flowing over a path with less resistance. As a result, the arc crawls up the wire (arc crawl), which is the electrode, making it difficult to maintain fusion at the targeted groove face, in particular at the bottom portion. On the other hand, if the feed angle of the weld wire fed from the power supply tip of the welding torch end exceeds 15° with respect to a perpendicular line, the shape of the weld bead becomes convex due to the arc being directed excessively to the groove face. Fusion then becomes insufficient for the arc at the next pass, causing a welding defect. Accordingly, the feed angle of the weld wire fed from the power supply tip of the welding torch end is preferably set to be 5° or more to 15° or less with respect to a perpendicular line. The feed angle is more preferably 6° or more to 12° or less.

Note that since the feed angle of the weld wire fed from the power supply tip of the welding torch end is the same as the inclination of the power supply tip, in particular the leading edge of the power supply tip, the feed angle of the weld wire can be controlled by the inclination of the leading edge of the power supply tip.

### Distance at the bottom portion groove between the lateral end of the tip of the weld wire and the groove face of the thick steel material: 0.5 mm or more to 2.0 mm or less

To achieve a deeper depth of fusion more stably at the bottom portion of the thick steel materials, the distance at the bottom portion groove between the lateral end of the tip of the weld wire and the groove face of the thick steel material is preferably 0.5 mm or more to 2.0 mm or less.

The reason is that if the distance at the bottom portion groove between the lateral end of the tip of the weld wire and the groove face of the thick steel material is less than 0.5 mm, the arc is generated between the upper portion of the wire and the groove face, and the groove face at the bottom portion of the thick steel materials cannot be efficiently fused. On the other hand, upon exceeding 2.0 mm, the arc separates from the groove face, and the groove face cannot be efficiently fused. The distance is more preferably in a range of 0.5 mm to 1.0 mm.

In this context, the lateral end of the tip of the weld wire refers to the lateral end that is closer to the groove face of the thick steel material that is being fused in each pass.

### Curvature radius of weld wire fed to power supply tip: 150 mm or more to 300 mm or less

In order to control the feed angle of the weld wire fed from the power supply tip of the welding torch end, a power supply tip with a bent leading end may be used. In this case, the weld wire passes through the power supply tip with a bent leading end. For the weld wire to pass through more smoothly, the weld wire is preferably bent in advance using a three-point roller or the like.

If the curvature radius of the weld wire is less than 150 mm, the feeding resistance of the wire increases, preventing stable feeding of the weld wire and making it difficult to maintain the arc. On the other hand, upon the curvature radius of the weld wire exceeding 300 mm, feeding with the leading end of the power supply tip in a bent state has no effect of reducing the feeding resistance, again preventing stable feeding of the weld wire and making it difficult to maintain the arc.

Accordingly, the curvature radius of the weld wire fed to the power supply tip is preferably 150 mm or more to 300 mm or less. The curvature radius is more preferably 175 mm or more to 275 mm or less.

### Weld deposit height H: 0.4 times or more to 1.0 times or less the bottom portion groove gap G

By appropriately managing the weld deposit height per layer with respect to the groove gap, the shape of the weld bead, including penetration, becomes constant for each pass, and stable penetration into the groove face can be ensured. Furthermore, higher heat input is effective for achieving deeper penetration, yet if the heat input is too high, the weld deposit height increases, making it difficult to fuse the groove face evenly at both sides.

If the weld deposit height per layer is less than 0.4 times the bottom portion groove gap G, heat input is insufficient, and deep fusion of the groove face becomes difficult. Moreover, the amount of deposition per pass is insufficient, and the shape of the weld bead ends up changing in each layer. On the other hand, if the weld deposit height per layer exceeds 1.0 times the bottom portion groove gap G, the amount of deposition per pass is too large, and the groove face cannot be fused evenly at both sides.

Accordingly, the weld deposit height, in particular the weld deposit height of the initial layer, is set to be 0.4 times or more to 1.0 times or less the bottom portion groove gap G. The weld deposit height is more preferably set to be 0.5 times or more to 0.8 times or less the bottom portion groove gap G.

### Shielding gas composition: 60 vol% or more of CO₂ gas

The shielding gas composition greatly affects the amount of oxygen in the weld metal. Therefore, the shielding gas composition is preferably a mixed gas containing 60 vol% or more of CO₂ gas, the remainder being an inert gas such as Ar. Using 100 vol% of CO₂ gas is particularly preferable.

The penetration at the weld zone is also influenced by the directionality of the arc and the gouging effect. Accordingly, the polarity of the welding is preferably wire minus (positive polarity), which yields a better arc directionality and larger gouging effect.

Conditions other than those described above need not be restricted, and a regular method may be used. For example, the following settings may be used. Weld current: 280 A to 360 A; welding voltage: 32 V to 37 V (increased with current); welding speed: 30 cm/min to 80 cm/min; length of protruding wire: 15 mm to 30 mm; wire diameter: 1.2 mm to 1.6 mm; welding heat input per pass: 10 kJ/cm to 25 kJ/cm.

Performing joint welding under the aforementioned preferred conditions makes it possible stably to obtain the welded joint contemplated by the present invention, in which defects due to high-temperature cracks, lack of fusion, or the like do not occur and that also has a small amount of deposition.

In the welded joint according to the present invention, in order to ensure the necessary depth of fusion at the bottom portion of the thick steel materials, the initial layer welding is particularly important. The layers other than the initial layer do not necessarily have to satisfy these conditions, yet it suffices for welding conditions basically to be similar to the aforementioned welding conditions.

### EXAMPLES

Steel materials having the groove shapes listed in Table 1 were welded by narrow-groove gas-shielded arc welding under the welding conditions listed in Table 2.

Gas cutting was used for groove formation in the steel materials, and no treatment such as grinding was performed on the groove face. The maximum depth of the concave portion on the groove face was measured using a laser displacement gauge.

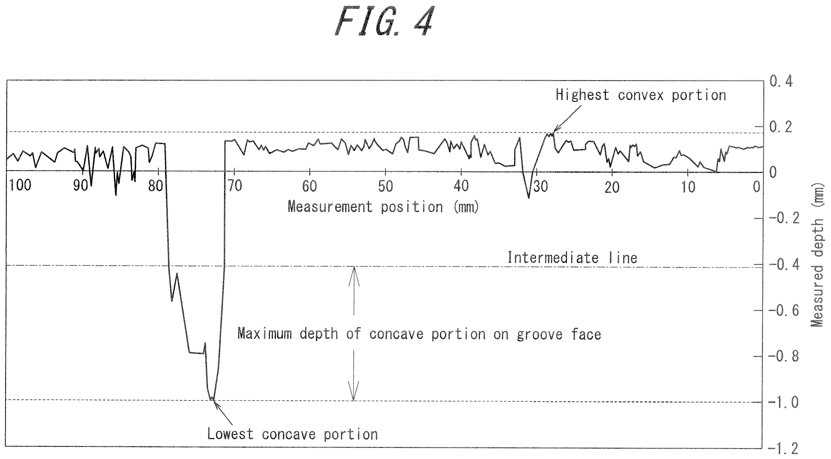

In other words, as illustrated in FIG. 4, two parallel lines were drawn respectively passing through the highest concave portion and the lowest convex portion among measurement points, with all of the measurement points falling between the two parallel lines. An intermediate line was also drawn. Here, a concave portion is a portion lower than the intermediate line, and the depth of the concave portion on the groove face was defined as the distance between the concave portion and the intermediate line. The maximum depth of the concave portion on the groove face is the maximum value of the depth of the concave portion.

The measurement results are also listed in Table 1.

Five cross-sections of the resulting welded joints were cut, and the fusion width of the bottom portion was measured in each cross-section. In order to measure the depth of fusion for each cross-section, the length corresponding to the bottom portion groove gap was subtracted from the measured fusion width, and the result was divided by two. The average was then calculated. This value was taken as the depth of fusion in the bottom portion of the steel material.

The resulting welded joints were subjected to ultrasonic testing and evaluated as follows.
Excellent: no defects detected
Good: only allowable defects with a defect length of 3 mm or less
Poor: defects with a defect length exceeding 3 mm detected
Table 2 also lists these results.

### [Table 1]

**Table 1**

| No. | Steel material | | Groove shape | | | |
|---|---|---|---|---|---|---|
| | Steel type (grade) | Sheet thickness t (mm) | Shape | Bottom portion groove angle θ (°) | Bottom portion groove gap G (mm) | Maximum depth of concave portion on groove face (mm) |
| 1 | 490 MPa grade | 40 | V-shape | 4 | 11 | 1.0 |
| 2 | 570 MPa grade | 100 | V-shape | 10 | 15 | <0.2 |
| 3 | 780 MPa grade | 25 | I-shape | 0 | 12 | 0.5 |
| 4 | corrosion-resistant steel | 60 | V-shape | 5 | 7 | <0.2 |
| 5 | 490 MPa grade | 22 | V-shape | 4 | 8 | 1.0 |
| 6 | 590 MPa grade | 80 | V-shape | 6 | 9 | 1.0 |
| 7 | 490 MPa grade | 40 | I-shape | 0 | 10 | 1.5 |
| 8 | 490 MPa grade | 40 | V-shape | 4 | 12 | 1.0 |
| 9 | 780 MPa grade | 25 | I-shape | 0 | 12 | 0.5 |
| 10 | 780 MPa grade | 25 | I-shape | 0 | 12 | 0.5 |
| 11 | 490 MPa grade | 40 | Y-shape | 5 | 10 | 0.8 |
| 12 | 490 MPa grade | 40 | Y-shape | 5 | 10 | 1.2 |
| 13 | 490 MPa grade | 40 | V-shape | 2 | 8 | 0.4 |
| 14 | 490 MPa grade | 40 | V-shape | 2 | 6 | 0.4 |
| 15 | 490 MPa grade | 40 | V-shape | 4 | 10 | 0.3 |
| 16 | 490 MPa grade | 40 | V-shape | 4 | 10 | 0.3 |
| 17 | 490 MPa grade | 40 | V-shape | 4 | 10 | 0.2 |

### [Table 2]

**Table 2**

| No. | Welding conditions | | | | | | | | | | | | Depth of fusion at bottom portion of thick stell material P (mm) | Total amount of oxygen and sulfur in weldmetal (mass ppm) | Results of ultrasonic testing | Notes |
|---|---|---|---|---|---|---|---|---|---|---|---|---|---|---|---|---|
| | Polarity | Feed angle of weld wire *φ* (°) | Distance between lateral end of tip of weld wire and groove face d (mm) | Curvature radius of weld wire (mm) | Current (A) | Voltage (V) | Welding speed (cm/min) | Heat input amount (kJ/cm) | Shielding gas composition | Number of passes | Weld deposit height H (mm) | H/G | | | | |
| 1 | wire minus | 12 | 0.5 | 250 | 360 | 35 | 55 | 13.7 | 100%CO₂ | 2 | 5.5 | 0.50 | 2.8 | 510 | excellent | Inventive Example |
| 2 | wire plus | 15 | 0 | 300 | 280 | 32 | 20 | 26.9 | 40 % Ar-60 % CO₂ | 3 | 15.1 | 1.01 | 1.5 | 400 | good | Inventive Example |
| 3 | wire plus | 12 | 2.5 | 250 | 340 | 37 | 60 | 12.6 | 100 % CO₂ | 2 | 4.8 | 0.40 | 1.8 | 460 | good | Inventive Example |
| 4 | wire minus | 5 | 2.0 | 150 | 350 | 35 | 55 | 13.4 | 100 % CO₂ | 2 | 5.3 | 0.76 | 2.0 | 650 | excellent | Inventive Example |
| 5 | wire minus | 7 | 1.0 | 175 | 330 | 35 | 50 | 13.9 | 20% Ar-80 % CO₂ | 2 | 5.5 | 0.69 | 2.5 | 520 | excellent | Inventive Example |
| 6 | wire minus | 8 | 1.0 | 225 | 360 | 35 | 70 | 10.8 | 100%CO₂ | 2 | 5.0 | 0.56 | 2.2 | 580 | excellent | Inventive Example |
| 7 | wire minus | 8 | 0.5 | 225 | 350 | 35 | 60 | 12.3 | 100 % CO₂ | 2 | 5.9 | 0.59 | 2.8 | 570 | excellent | Inventive Example |
| 8 | wire minus | 10 | 1.0 | 250 | 350 | 35 | 40 | 18.4 | 100 % CO₂ | 2 | 7.4 | 0.61 | 2.4 | 530 | excellent | Inventive Example |
| 9 | wireplus | 12 | 2.5 | 400 | 320 | 34 | 55 | 11.9 | 100 % CO₂ | 2 | 4.8 | 0.40 | 1.5 | 450 | good | Inventive Example |
| 10 | wire plus | 12 | 2.5 | 250 | 340 | 37 | 60 | 12.6 | 20% Ar- 80 % CO₂ | 2 | 4.8 | 0.40 | 1.6 | 420 | good | Inventive Example |
| 11 | wire minus | 10 | 1.0 | 225 | 300 | 30 | 50 | 10.8 | 100%CO₂ | 2 | 5.9 | 0.59 | 2.0 | 480 | excellent | Inventive Example |
| 12 | wire minus | 12 | 1.0 | 250 | 340 | 37 | 60 | 12.6 | 100 % CO₂ | 2 | 7.4 | 0.74 | 2.4 | 540 | excellent | Inventive Example |
| 13 | wireminus | 8 | 4.0 | 225 | 310 | 32 | 40 | 14.9 | 100 % CO₂ | 1 | 3.0 | 0.37 | 0.5 | 460 | poor | Comparative Example |
| 14 | wire minus | 5 | 1.0 | 225 | 350 | 35 | 50 | 14.7 | 100% CO₂ | 2 | 5.9 | 0.98 | 1.2 | 480 | poor | Comparative Example |
| 15 | wire minus | 2 | 1.5 | 100 | 320 | 34 | 50 | 13.1 | 60% Ar-40 % CO₂ | 2 | 5.2 | 0.52 | 1.2 | 360 | poor | Comparative Example |
| 16 | wire minus | 0 | 2.0 | 500 | 340 | 35 | 50 | 14.3 | 100% CO₂ | 2 | 5.7 | 0.57 | 0.0 | 470 | poor | Comparative Example |
| 17 | wire minus | 20 | 1.0 | 250 | 350 | 35 | 50 | 14.7 | 80% Ar-20 % CO₂ | 2 | 5.9 | 0.59 | 1.2 | 320 | poor | Comparative Example |

As illustrated in Table 2, for each of Sample Nos. 1 to 12, which are Inventive Examples, the depth of fusion at the bottom portion of the steel material was 1.5 mm or more, and during ultrasonic testing, either no defect was detected or the defect length was 3 mm or less.

Conversely, for each of Sample Nos. 13 to 17, which are Comparative Examples, the depth of fusion at the bottom portion of the steel material did not reach 1.5 mm, and during ultrasonic testing, a defect with a defect length exceeding 3 mm was detected.

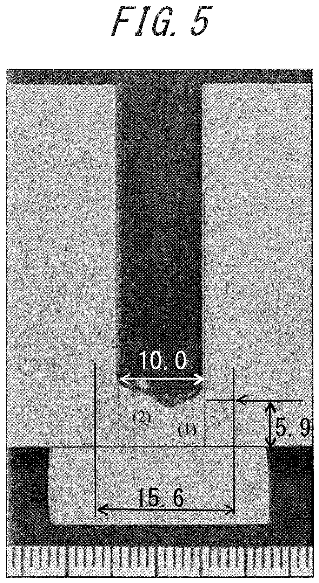

FIG. 5 is a photograph of a groove cross-section after initial layer welding of Sample No. 7, an Inventive Example. Numbers (1) and (2) in FIG. 5 indicate the weld bead of the first pass and of the second pass. As is clear from FIG. 5, a good depth of fusion was obtained on both sides of the groove face at the bottom portion of the thick steel materials, with a depth of fusion at the bottom portion of the thick steel materials of approximately 3.2 mm on the first pass welding and approximately 2.4 mm on the second pass welding.

### INDUSTRIAL APPLICABILITY

1: Thick steel material
2: Groove face of thick steel material
3: Bottom portion groove
4: Power supply tip of welding torch
5: Weld wire
6: Backing material
7: Weld bead
θ: Bottom portion groove angle
G: Bottom portion groove gap
h: Bottom portion groove height
t: sheet thickness
*φ*: Feed angle of weld wire fed from power supply tip of welding torch end
d: Distance at bottom portion groove between lateral end of tip of weld wire and groove face of thick steel material
P: Depth of fusion at bottom portion of thick steel material
H: Weld average deposit height

## Claims

1. A narrow-groove gas-shielded arc welded joint with a groove angle of 20° or less and the narrowest groove width between steel materials to be welded being 50% or less of the sheet thickness of the steel materials obtained by multilayer, narrow-groove gas-shielded arc welding of thick steel materials having a sheet thickness of 22 mm or more,
a depth of fusion at a bottom portion of the thick steel materials being 1.5 mm or more, and a total amount of oxygen (O) and sulfur (S) contained in a weld metal being in a range of 400 mass ppm or more to 1000 mass ppm or less, wherein in initial layer welding during the narrow-groove gas-shielded arc welding, a weld deposit height is 0.4 times or more to 1.0 times or less a bottom portion groove gap.

## Patentansprüche

1. Schweißstoß, mittels Engspalt-Lichtbogenschweißen unter Schutzgas mit einem Spaltwinkel von 20° oder weniger und der engsten Spaltweite zwischen zu verschweißenden Stahlmaterialien von 50 % oder weniger der Blechdicke der Stahlmaterialien geschweißt, erhalten durch mehrlagiges Engspalt-Lichtbogenschweißen unter Schutzgas von dicken Stahlmaterialien mit einer Blechdicke von 22 mm oder mehr;
wobei eine Verschmelzungstiefe an einem Bodenabschnitt des dicken Stahlmaterials 1,5 mm oder mehr beträgt und eine Gesamtmenge an Sauerstoff (O) und Schwefel (S), die in einem Schweißmetall enthalten ist, in einem Bereich von 400 Masse-ppm oder mehr bis 1.000 Masse-ppm oder weniger ist, wobei beim Schweißen der Anfangslage während des Engspalt-Lichtbogenschweißens unter Schutzgas eine Höhe der Schweißablagerung das 0,4-fache oder mehr bis zum 1,0-fachen oder weniger einer Spaltlücke des Bodenabschnitts beträgt.

## Revendications

1. Joint soudé à l'arc sous protection gazeuse à gorge étroite ayant un angle de gorge de 20 ° ou moins et la largeur de gorge la plus étroite entre des matériaux d'acier à souder étant égale à 50 % ou moins de l'épaisseur de tôle des matériaux d'acier obtenus par soudage à l'arc sous protection gazeuse à gorge étroite multicouche de matériaux d'acier épais ayant une épaisseur de tôle de 22 mm ou plus,
une profondeur de fusion au niveau d'une partie inférieure des matériaux d'acier épais étant de 1,5 mm ou plus, et une quantité totale d'oxygène (O) et de soufre (S) contenus dans un métal de soudure étant dans une plage comprise entre 400 ppm en masse ou plus et 1000 ppm en masse ou moins, dans lequel, lors du soudage de couche initiale pendant le soudage à l'arc sous protection gazeuse à gorge étroite, une hauteur de dépôt de soudure est comprise entre 0,4 fois ou plus et 1,0 fois ou moins un écartement de gorge de partie inférieure.
